Europäisches Patentamt

European Patent Office

Office européen des brevets

(19)

(11) Veröffentlichungsnummer: **0 200 875 B1**

(12) # EUROPÄISCHE PATENTSCHRIFT

(45) Veröffentlichungstag der Patentschrift: **11.12.91**

(51) Int. Cl.⁵: **C02F 3/12, G01N 27/00**

(21) Anmeldenummer: **86102914.8**

(22) Anmeldetag: **05.03.86**

(54) **Verfahren und Vorrichtung zur Abwasserreinigung nach dem Belebtschlammverfahren.**

(30) Priorität: **07.03.85 DE 3508126**

(43) Veröffentlichungstag der Anmeldung:
**12.11.86 Patentblatt 86/46**

(45) Bekanntmachung des Hinweises auf die
Patenterteilung:
**11.12.91 Patentblatt 91/50**

(84) Benannte Vertragsstaaten:
**AT BE CH DE FR GB IT LI LU NL SE**

(56) Entgegenhaltungen:
**DE-A- 1 584 923**
**DE-A- 2 909 333**

**EUROPEAN JOURNAL OF APPLIED MICRO-
BIOLOGY AND BIOTECHNOLOGY, Band 15,
1982, Seiten 246-251, Springer-Verlag, DE: E.
VAN DEN EYNDE et al.: "Relation between
substrate feeding pattern and development
of filamentous bacteria in activated sludge
processes"**

(73) Patentinhaber: **Forschungszentrum Jülich
GmbH
Postfach 1913
W-5170 Jülich(DE)**

(72) Erfinder: **Soeder, Carl Johannes, Prof.
Diemelstrasse 5
W-4600 Dortmund 41(DE)**
Erfinder: **Keusen, Heinrich
Artilleriestrasse 30
W-5170 Jülich(DE)**
Erfinder: **Zanders, Erich
Kerpener Strasse 9
W-5013 Elsdorf(DE)**
Erfinder: **Hofmeister, Franz
Auf der Hüchte 25
W-4440 Rheine 11(DE)**

## Beschreibung

Die Erfindung bezieht sich auf ein Verfahren zur Abwasserreinigung nach dem Belebtschlammverfahren mit einem belüfteten Belebungsbecken mit intermittierender schubweiser Abwasserzufuhr, und sie umfaßt eine dafür geeignete Anlage.

Es ist üblich und allgemein anerkannte Regel der Technik, die kontinuierliche, aber meist nicht konstante Flußrate des Abwassers, das in die biologische Stufe einer Kläranlage eingeleitet wird, nicht zu manipulieren. Dadurch ergibt sich eine kontinuierliche Beschickung der Belebungsbecken, und innerhalb der Grenzen, die z.B. nach oben durch Trennkanalisation und/oder Regenüberlauf gesetzt sind, ist die Flußrate des Abwassers in der Kläranlage direkt abhängig von der Zuflußrate. Dies ergibt bei häuslichem Abwasser die bekannten Tagesgänge des Mengenflusses und der CSB- bzw. BSB$_5$-Konzentration.

Diese Tagesgänge (oder Wochengänge) der Abwasserfracht schlagen sich zumeist in Schwankungen der Abbauleistung nieder, d.h. sie führen zu Schwankungen der CSB- und der BSB$_5$-Konzentration im Ablauf, was auch in der Bemessung der zulässigen CSB-Ablaufwerte gemäß Abwasserabgabengesetz klar zum Ausdruck kommt. Danach ist z.B. der zulässige Höchstwert das Doppelte vom Regelwert (= Betriebsmittelwert). Dies zeigt deutlich, daß es bislang kaum möglich erschien, in relativ engen Grenzen konstante Reinigungsleistungen zu erzielen.

Einen Fortschritt im Hinblick auf eine Egalisierung der Ablaufwerte bringt das in der DE-A-29 09 333 beschriebene Verfahren, bei dem die Abwasserzufuhr zum Belebungsbecken direkt oder über einen Zwischenspeicher abhängig von der im Becken kontrollierten Sauerstoffkonzentration als Maß für die akute Belastung im Becken gesteuert wird, wodurch sonst zur Egalisierung vorgesehene große Speichervolumina in ihrer Größe vermindert werden können.

Ein zusätzliches Problem der Abwasserreinigung nach dem Belebtschlammverfahren besteht in einer unkontrolliert auftretenden Bildung von schwer abtrennbarem Blähschlamm, insbesondere bei ungünstigen C : N : P - Verhältnissen.

Laborversuche von Van den Eynde u.a. (Europ. J. Appl. Microbiol. Biotechnol. 15 (1982) 246) über das Absetzverhalten von Bakterien bei Belebtschlammverfahren mit Bakterien-Mischkulturen zeigen, daß durch intermittierende Substratzufuhr eine Verdrängung der fädigen Blähschlammbakterien durch die erwünschten Flockenbildner bewirkt wird. Bei diesen Versuchen wurden schubweise (mit einer Taktzeit von ca. 1 h) 1,7 % bzw. 2,5 % des Behältervolumens zum "Belebungsbehälter" hinzugefügt unter gleichzeitiger Abgabe entsprechender Mengen Behälterinhalt durch Überlauf.

Eine Übertragung der in "plug flow feeding-simulation" durch intermittierende Abwasserzugabe erzielten Laborbefunde auf die technische Abwasserreinigung erscheint nicht ohne weiteres möglich. Van den Eynde schlägt für technische Prozesse in Reihe betriebene Belüftungstaschen, zwei in Reihe arbeitende Belüftungsbecken oder die Unterbrechung der Belüftung nahe dem Abwasserzulaufbereich vor, in den auch der Rücklaufschlamm eingeführt werden soll.

Solche Techniken sind teilweise schon recht alt: So wurde bereits in den allerersten Veröffentlichungen über das Belebtschlammverfahren als vorteilhaft angesehen, das Abwasser in einer solchen Weise abwechselnd in zwei oder mehrere Belebungsbecken einzuleiten, daß sich für jedes einzelne Becken ein satzweiser Betrieb ergibt (J. Soc. Chem. Ind. 33 (1914) 112). Diese Betriebsweise ist neuerdings wieder als Sequential Batch Reactor propagiert worden (J. Water Pollut. Control Fed. 51 (1980) 2747). Eine Variante davon ist das kontinuierlich beschickte Belebungsbecken mit intermittierender Belüftung und Entleerung (Publ. Health Eng. 8 (1980) 20; J. Water Pollut. Control Fed. 56 (1984) 1160). Besondere Vorteile der letztgenannten Verfahrensweise sind gute Eliminationsraten bei stark schwankenden Abwasserkonzentrationen und -mengen sowie hohe Denitrifikationsraten.

Nach einem anderen aeroben Abwasserreinigungsverfahren (AT-PS 321 833) erfolgt eine chargenweise Behandlung des Abwassers unter erhöhtem Luftdruck im Belebungsbecken mit plötzlicher Druckentlastung nach Beendigung der biologischen Behandlung, wodurch eine gewisse Schlammverdichtung erzielt werden soll.

Der Erfindung liegt nun die Aufgabe zugrunde, ein Verfahren zu entwickeln, mit dem auch im technischen Bereich bei Abwässern mit ungünstigen C : N : P - Verhältnissen die Neigung zur Blähschlammbildung unterdrückt wird und ferner unabhängig von tageszeitlichen und wochentäglichen Schwankungen der Schmutzfracht eine in engen Grenzen gleichbleibende Reinigungsleistung erzielt werden kann.

Das zu diesem Zweck entwickelte Verfahren der eingangs genannten Art ist dadurch gekennzeichnet, daß jeweils 5 bis 30 % des Beckenvolumens zugegeben werden, wenn die durch Messung der Sauerstoffkonzentration zu ermittelnde bakterielle Stoffwechselaktivität im Becken unter einen vorgegebenen Wert absinkt, während der Abwasserablauf zum Nachklärbecken gleichmäßig erfolgt.

Bei eigenen Versuchen wurde nämlich bei der konventionellen, kontinuierlichen Behandlung von Abwasser in Belebungsbecken bei ungünstigem C : N : P - Verhältnis beobachtet, daß die auftretende Blähschlammbildung durch schubweise Dosierung des Abwasserzulaufs mit entsprechenden Taktzeiten und Mengen bei möglichst kurzzeitiger Zugabe völlig unterbunden werden kann, wobei durch gedrosselten Ablauf dafür gesorgt wird, daß die Phase erhöhter Schmutzfracht im Becken voll zur Wirkung kommen kann.

Die schubweise Dosierung erfolgt so, daß der Abwasserzustrom durch eine Vorrichtung mit Ventilfunktion für eine gewisse Zeit unterbrochen wird. Am Ende des Dosierungszyklus wird das Ventil, das auch als verstellbares Wehr ausgebildet sein kann, geöffnet und innerhalb einer kurzen Zeitspanne gelangt ein Schub frischen Abwassers in das Belebungsbecken. Mit der erneuten Unterbrechung des Abwasserzuflusses beginnt der nächste Dosierungszyklus. Typische Periodenlängen des Dosierungszyklus sind z.B. 30 - 60 Min. Die durchschnittliche hydraulische Belastung und das Schlammrücklaufverhältnis sind bei schubweiser Dosierung die gleichen wie bei der gewohnten kontinuierlichen Beschickung des Belebungsbeckens.

Die Periode dieser insbesondere bei Abwässern, die zu starker Blähschlammbildung neigen, günstigen stoßweisen Abwasserzufuhr zum Belebungsbecken ist innerhalb der genannten Werte wählbar, muß aber auf jeden Fall an die jeweiligen Abbaubedingungen angepaßt werden.

Erfindungsgemäß wird insbesondere eine automatische Verfahrensoptimierung über ein Regelsystem vorgesehen, das als Indikator für die bakterielle Umsetzungsrate insbesondere die Sauerstoffkonzentration im Belebungsbecken ermittelt und für die Zulaufsteuerung ausnutzt.

Weitere Besonderheiten der Erfindung gehen aus den Patentansprüchen hervor.

Nachfolgend wird die Erfindung anhand der eingefügten Zeichnungen näher erläutert. Es zeigen:

| | |
|---|---|
| Figur 1 und 2 | den intermittierenden Aufstau eines Sandfangs; |
| Figur 3 | eine Sauerstoffkurve für ein schubweise belastetes Belebungsbecken; |
| Figur 4 | ein Steuerungsschema für eine schubweise Abwasser-Dosierung; |
| Figur 5 | den Schlammvolumen- Index (ml/g) bei kontinuierlicher Dosierung eines Blähschlamm erzeugenden Abwassers; |
| Figur 6 | den Schlammvolumen-Index bei schubweiser (oder kontinuierlicher) Dosierung eines Blähschlamm erzeugenden Abwassers und |
| Figur 7 | ein Schema für eine erfindungsgemäß geregelte Belebt- |

schlammanlage.

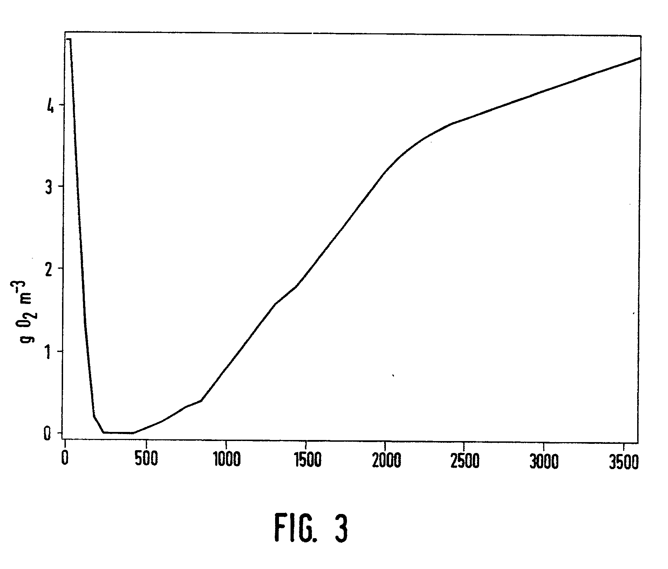

Das Verfahren basiert auf dem Verlauf der bakteriellen Umsetzungsrate im Belebungsbecken bei schubweiser Abwasserzufuhr, wie sie insbesondere an den Änderungen der Sauerstoffkonzentration im Belebungsbecken über den Dosierungszyklus hinweg ablesbar ist in der z.B. in Fig. 3 gezeigten Weise:

Wenn zu Beginn eines Dosierungszyklus (mit 120 sec Zulauf pro Std.) frisches Abwasser (hier: Brüdenkondensat-Faulwasser) in das Belebungsbecken einströmt, sinkt die Konzentration des hierin gelösten Sauerstoffs trotz fortgesetzter konstanter Belüftung innerhalb weniger Minuten auf einen sehr niedrigen Wert nahe der Nachweisgrenze ab. Je nach Abwasserkonzentration und dosiertem Volumen vergeht nach Erreichen des $O_2$-Minimums einige Zeit (z.B. 20 - 40 Minuten), bis der Gelöst-Sauerstoff wieder auf Werte ansteigt, wie sie bei kontinuierlicher Abwasserzufuhr eingestellt werden sollten.

Diese periodischen Schwankungen der $O_2$-Konzentration werden nun gemäß der Erfindung ausgenutzt, um die intermittierende Abwasserdosierung auf einfache Weise zu regeln. Dazu wird die $O_2$-Konzentration vorzugsweise im unteren Bereich des Belebungsbeckens kontinuierlich mit einer geeigneten $O_2$-Elektrode gemessen, die an einen Meßverstärker angeschlossen ist.

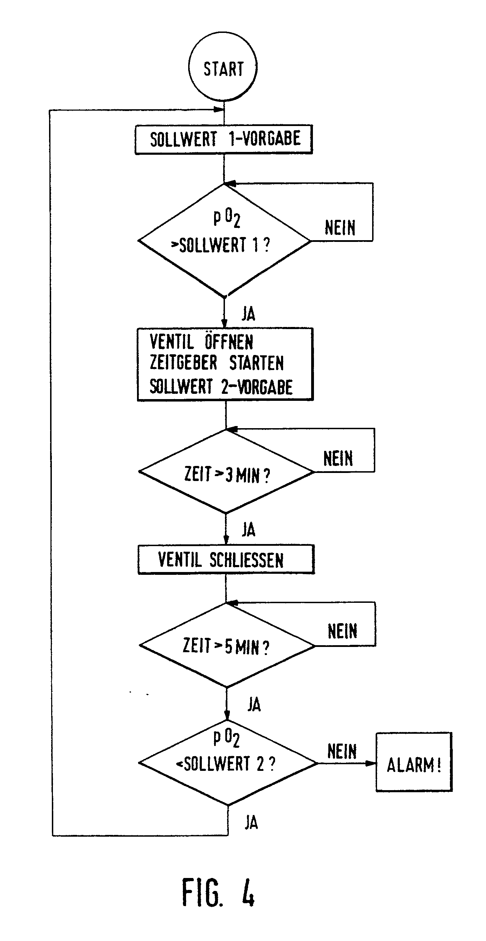

Vorzugsweise wird der Meßwert mittels eines Mikroprozessors mit zwei einstellbaren Sollwerten verglichen, wobei der zweite (untere) Wert zur Kontrolle des störungsfreien Arbeitens der Anlage dient: Bei $O_2$-Konzentrationen unterhalb des ersten Sollwerts (z.B. 3 - 4 mg $O_2$/l) bleibt der Zulauf zum Belebungsbecken geschlossen, und im Sandfang oder im Vorratsbecken wird Abwasser aufgestaut. Nach Überschreiten des ersten $O_2$-Sollwerts wird der Zulauf vorzugsweise über einen Zeitgeber z.B. für 3 Minuten freigegeben (Fig. 4).

Gleichzeitig wird im Mikroprozessor auf den zweiten $O_2$-Sollwert (z.B. 0,5 mg/l) umgeschaltet. Wird dieser zweite Sollwert z.B. 5 Minuten nach Öffnen des Zulaufs nicht unterschritten, so liegt entweder eine Abbaustörung oder ein Dosierungsfehler vor, was ein Alarmsignal auslöst. Beispielsweise 15 Minuten nach Öffnen des Zulaufs schaltet der Zeitgeber bei störungsfreiem Betrieb wieder auf den ersten Sollwert zurück, und der Regelkreis befindet sich wieder im Ausgangszustand. Auf die beschriebene Weise (Fig. 4) lassen sich unabhängig von der ankommenden Schmutzstoff-Fracht und der Temperatur stabile Ablaufwerte erzielen. Nach den bisherigen Erfahrungen ist der Rest-CSB im Ablauf etwas niedriger (5 - 10 %) als bei kontinuierlicher Beschickung von Belebungsbecken. Außerdem wird während der Phase der verminderten $O_2$-Konzentrationen unterhalb des zweiten Sollwerts ein höherer Wirkungsgrad des $O_2$-Eintrags erzielt. Dies ermöglicht eine gewisse Senkung des spezifischen Bedarfs an Belüftungsenergie.

Ein (unterer) Sollwert kann zusätzlich zur Auslösung von Schaltvorgängen dienen, z.B. zum Abschluß des Dosierungsvorganges.

Im Falle stärkerer tages- und/oder wochenzeitlicher Schwankungen der hydraulischen Belastung (Q) empfiehlt es sich, die hydraulische Belastung des Belebungsbeckens durch Einbau eines Ausgleichsbeckens zu vergleichmäßigen.

Analog zu der vorstehend beschriebenen Regelung der Abwasserdosierung über die $O_2$-Konzentration kann auch jeder andere hydrochemische oder physikalisch-chemische Parameter (pH, rH, $pCO_2$, Konzentrationen von Acetat, Methanol o.dgl.) als Regelgröße herangezogen werden, der sich während eines Dosierungszyklus in ausreichendem Maße und in charakteristischer Weise ändert.

Die Taktzeit bzw. Indikatorwerte und Zufuhrmenge richten sich nach der Schmutzfracht des zu reinigenden Abwassers, der vorgesehenen Raumbzw. Schlammbelastung des Belebungsbeckens und dem gewünschten Reinigungsergebnis und können mithin bei sehr unterschiedlichen Werten angesetzt werden.

Üblicherweise wird das Zufuhrvolumen pro Taktzeit zwischen 5 und 30 %, insbesondere in der Gegend von 10 - 20 % des Belebungsbeckenvolumens liegen. Es kann aber auch z.B. bei Schwachlastbetrieb (um 0,2 kg CSB/kg Trockensubstanz . d) bis zu 50 % ausmachen und bei Behandlung stark verschmutzter Industrieabwässer im Hochlastbetrieb (um 10 kg CSB/kg TS . d) unter 5 % liegen.

Die zweckmäßige Taktzeit richtet sich nach der biologischen Aktivität des Schlamms und kann empirisch ermittelt werden. Sie wird im allgemeinen in der Gegend von 0,5 - 2 Std. für Behandlung mäßig verschmutzter Abwässer mit Nitrifikationsbedarf liegen.

Auch die Feststellung der "Schaltwerte" für die Abwasserzufuhr ($W_1$) und die Alarmauslösung ($W_2$) werden empirisch ermittelt, wobei $W_1$ z.B. bei Schwachlastbetrieb und Reinigung mit Nitrifikation in der Nähe des $O_2$-Sättigungswertes der Kurve (s. Fig. 3) für die Sauerstoffkonzentration im Belebungsbecken, d.h. im Bereich von 4 - 5 mg $O_2$/l angesetzt wird, während $W_1$ bei Hochlastbetrieb und/oder Vorreinigungsbetrieb bei etwa 2 mg $O_2$/l oder noch darunter vorgesehen werden kann.

Auf die Sauerstoffsättigung des behandelten Wassers bezogen, kann $W_1$ insbesondere zwischen 5 % und 90 %, im allgemeinen zwischen 50 und 80 % liegen.

Der alarmauslösende Wert von $W_2$ wird ebenfalls aus der fortlaufenden Aufzeichnung der Sauerstoffkonzentration abgelesen: Er liegt oberhalb des (höchsten) Sauerstoffminimums der Kurve (s. Fig. 3). $W_2$ richtet sich insbesondere nach dem für den Abbauprozeß typischen Abfall der Sauerstoffkurve nach Beendigung der Abwasserzufuhr: Wenn der $O_2$-Meßwert innerhalb einer möglichst kurzen Zeitspanne von maximal 10 min (insbesondere von 2 - 5 min) nicht unter einen vorgegebenen Wert abgefallen ist, wird Alarm ausgelöst. Dieser vorgegebene Wert liegt deutlich über dem für die gewählte Alarmzeit typischen Wert, insbesondere 0,5 bis 2 mg/l darüber.

Sollten Zusammensetzung und Menge des anfallenden Abwassers weitgehend konstant sein, so läßt sich der Dosierungszyklus aufgrund optimierter Erfahrungswerte auch über einen elektrischen Zeitgeber oder über eine Zeitschaltuhr einstellen. In diesem Fall hat der Dosierungszyklus eine konstante Periodenlänge.

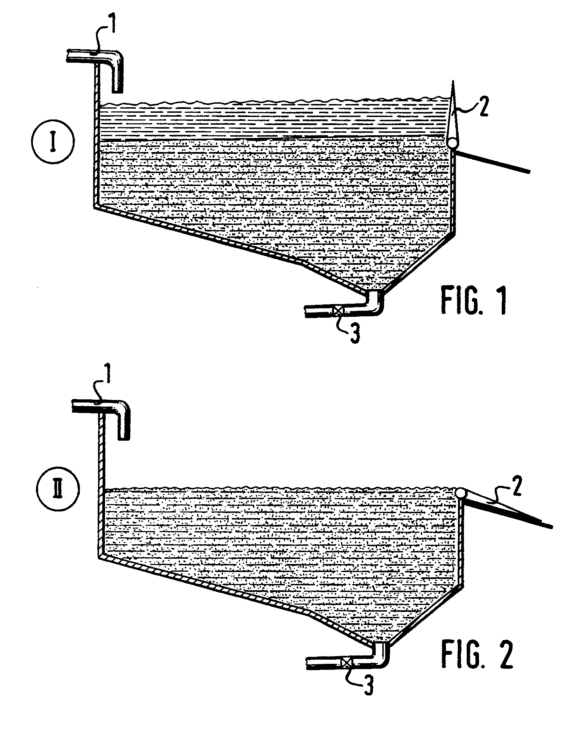

Die einfachste Anordnung zur schubweisen Dosierung des Abwasserzustroms in ein Belebungsbecken besteht darin, hinter dem Sandfang ein verstellbares Wehr anzubringen, dessen Funktion elektromechanisch geregelt wird (Fig. 1 und 2). Diese Vorrichtung bietet sich vor allem für Anlagen mit weitgehend gleichmäßigem Abwasserzulauf (über 1) an.

In Phase I des Dosierungszyklus steht das Wehr (2) senkrecht und blockiert den Abwasserstrom vom (unbelüfteten oder belüfteten) Sandfang in das Belebungsbecken.

Phase II: Durch einen elektrischen Impuls wird der Sperrmechanismus des verstellbaren Wehrs geöffnet. Es klappt um, und das gestaute Abwasser strömt in kurzer Zeit in das Belebungsbecken.

Phase III: Das verstellbare Wehr wird mittels eines Getriebemotors wieder in senkrechte Position gebracht.

Den gleichen Zweck wie ein verstellbares Wehr erfüllt ein elektromechanisch bedienter Schieber, der den Ablauf des Sandfangs über eine Rinne oder ein Rohr entsprechend den Steuersignalen eines der erfindungsgemäßen Regelkreise periodisch öffnet und schließt. Über 3 wird der Schlamm abgezogen.

Stellt man bei einer hydraulischen Verweilzeit des Abwassers von 4 Std. und einem Schlammrücklaufverhältnis von z.B. 500 % pro Tag die Dauer des Dosierungszyklus z.B. auf 1 Std. ein (Phase I: 55 Minuten; Phase II: 3 Minuten; Phase III: 2 Minuten), so ergibt sich nach erfolgter Dosierung im Belebungsbecken ein um 20 % vergrößertes Flüssigkeitsvolumen bzw. eine entsprechend vergrößerte Füllhöhe. Um trotz des derart schwankenden Pegelstandes für weitgehend gleichmäßigen Ablauf in das Nachklärbecken zu sorgen, fließt der Beckeninhalt nicht über eine Überlaufkante in die Auffangrinne, sondern strömt gegen einen Widerstand ausreichender Größe z.B. durch kranzförmig in die Beckenwand eingesetzte, relativ enge Rohrstutzen (lichte Weite z.B. 3 - 4 cm) in die Auffangrinne und von hier in das Nachklärbecken.

Bei Anlagen ohne Sandfang ist es erforderlich, ein Vorratsbecken einzubauen, dessen Volumen z.B. 10 - 20 % des Belebungsbeckenvolumens beträgt. Dieser kontinuierlich beschickte, belüftete oder unbelüftete Behälter wird im allgemeinen über einen Schieber- oder Ventilmechanismus gemäß Fig. 1 entleert. Nur bei konstanter Abwasserzusammensetzung und -flußrate wird eine selbsttätige Entleerung des Vorratsbeckens durch einen Überlaufmechanismus vorgenommen werden können.

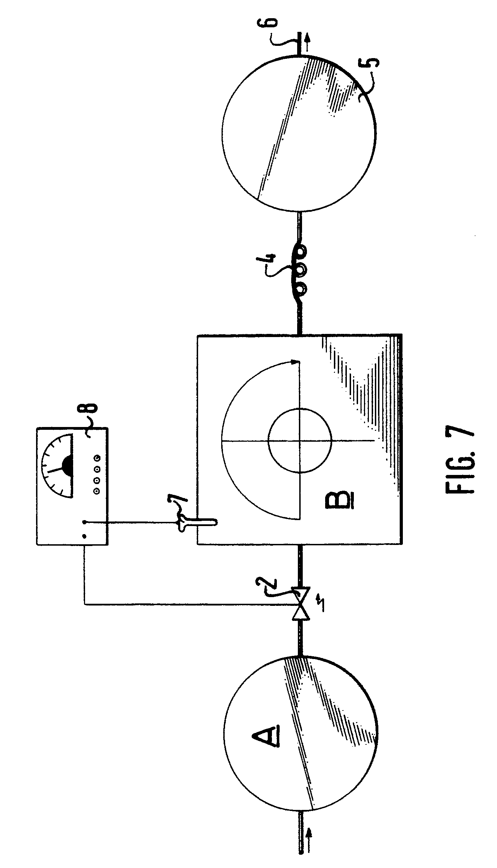

Gemäß Fig. 7 wird das Belebungsbecken B schubweise mit Abwasser aus dem Vorklärbecken A über ein Element 2 mit Ventilfunktion gespeist, während der Ablauf über eine Drosselstelle 4 in ein Nachklärbecken 5 mit Ablauf 6 kontinuierlich erfolgt. Die Arbeitsweise des Ventilelements 2 unterliegt einem von der Sonde 7 gesteuerten Regelmechanismus, der durch 8 angedeutet wird und in der in Fig. 4 gezeigten Weise arbeitet.

Anwendungsbeispiel

Beim Abbau von Brüdenkondensat-Faulwasser (CSB-Konzentration ca. 10 kg m$^{-3}$) aus Biogasreaktoren (Aivasidis und Wandrey, Umschau Wissenschaftmagazin 84 (1984) 15) wurde nach Verdünnung auf 1 : 15 ein CSB-Abbaugrad von 90 ± 3 % erzielt. Dabei betrug die Belüftungszeit 24 h, die $O_2$-Konzentration im Belebungsbecken 4,0 ± 0,3 mg/l, das Schlammrücklaufverhältnis ca. 750 % d$^{-1}$ und die Schlammbelastung (B$_{TS}$) 0,3 - 0,4 kg CSB je kg Belebtschlammtrockensubstanz. Die Temperatur lag bei 22 ± 2 °C. Der Abbau wurde nach einigen Tagen durch massive Blähschlammbildung (SVI > 1000 ml g$^{-1}$) schwer behindert.

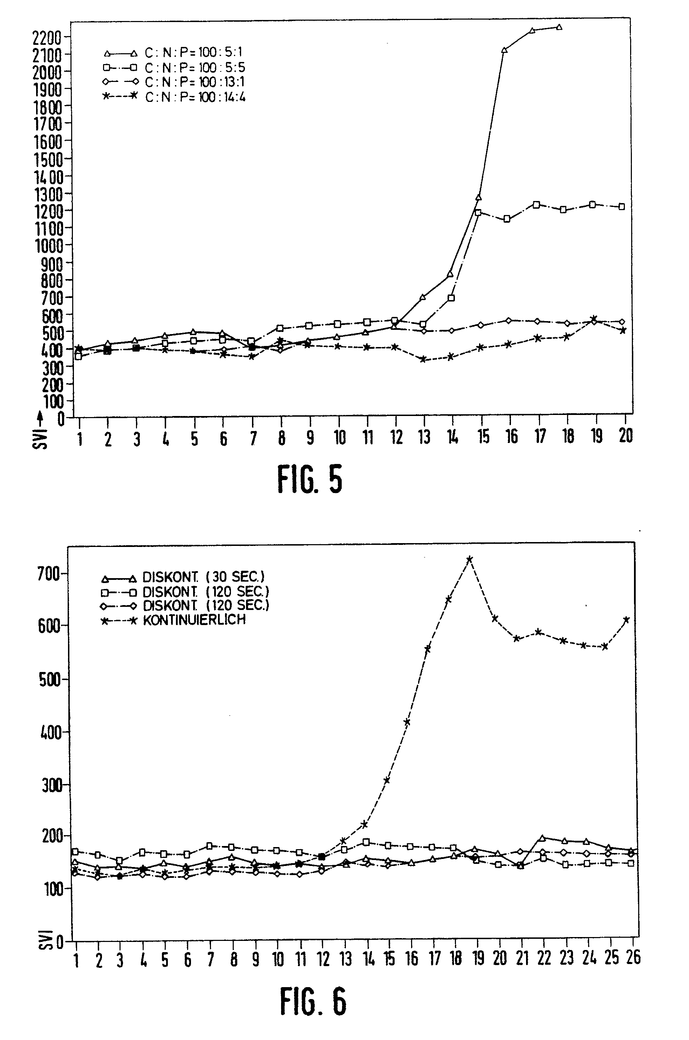

Durch Aufstockung des ursprünglichen C : N : P - Verhältnisses (100 : 5 : 1), wie sie zur Bekämpfung von Blähschlamm empfohlen wird (Kapp, DFG-Forschungsbericht KR 624/1, Institut für Siedlungswasserbau, Wassergüte und Abfallwirtschaft, Universität Stuttgart (1980)), kann der Schlammvolumen-Index zwar auf bis zu 400 ml g$^{-1}$ verringert (Fig. 5), aber damit doch kein ausreichendes Absetzverhalten erreicht werden.

Die Dosierungszyklen wurden mit einem Zeitgeber auf 30 - 120 sec h$^{-1}$ eingestellt, ohne den Gesamtdurchsatz gegenüber der kontinuierlichen Betriebsweise zu ändern, die in einem Kontrollbecken beibehalten wurde. Wie aus Fig. 6 ersichtlich, ergab die schubweise Dosierung des nicht durch Nährstoffzusätze veränderten Abwassers ein einwandfreies Absetzverhalten. Der auf CSB-Elimination bezogene Wirkungsgrad (90 ± 3 %) verschlechterte sich nicht, sondern er wurde im Durchschnitt der bisher durchgeführten Messungen sogar um etwa 5 % verbessert.

Diese Ergebnisse zeigen die Wirksamkeit der pulsweisen Abwasserdosierung zur Bekämpfung von Blähschlamm und zur Effizienzverbesserung der aeroben Abwasserbehandlung.

Bevorzugtes Einsatzgebiet für die schubweise Abwasserdosierung sind industrielle Kläranlagen, in denen es erfahrungsgemäß zu Betriebsstörungen durch Blähschlamm kommt, wie z.B. bei der Behandlung von Abwässern der Lebensmittelindustrie.

**Patentansprüche**

1.  Verfahren zur Abwasserreinigung nach dem Belebtschlammverfahren mit einem belüfteten Belebungsbecken mit intermittierender schubweiser Abwasserzufuhr,
    **dadurch gekennzeichnet,**
    daß jeweils 5 bis 30 % des Beckenvolumens zugegeben werden, wenn die durch Messung der Sauerstoffkonzentration zu ermittelnde bakterielle Stoffwechselaktivität im Becken unter einen vorgegebenen Wert absinkt, während der Abwasserablauf zum Nachklärbecken weitgehend gleichmäßig erfolgt.

2.  Verfahren nach Anspruch 1,
    **dadurch gekennzeichnet,**
    daß die schubweise Abwasserzufuhr mit einer Taktzeit von 0,5 bis 2 h erfolgt.

3.  Verfahren nach Anspruch 1 oder 2,
    **dadurch gekennzeichnet,**
    daß ein Alarmsignal ausgelöst wird, wenn der Abfall der Sauerstoffkonzentration nicht dem typischen Verlauf der Sauerstoffkurve entspricht.

4.  Abwasserreinigungsanlage zur Durchführung des Verfahrens nach einem der vorangehenden Ansprüche mit einem belüfteten Belebungsbecken mit einem Ablauf zum Nachklärbecken sowie mit einem Vorratsbecken mit Entleerung in das Belebungsbecken,
    **gekennzeichnet durch**
    einen über einen Schieber- oder Ventilmechanismus schnellentleerbaren Stauraum im Vorratsbecken, der 5 bis 30 % des Belebungsbeckenvolumens entspricht, eine Drosselsstelle im Ablauf zum Nachklärbecken und ein Regelsystem für den Wasserzulauf mit einer Programmsteuerung über einen Zeitgeber nach Erfahrungswerten des zeitlichen Verlaufs der $O_2$-Konzentration.

5.  Anlage nach Anspruch 4,
    **gekennzeichnet durch**

ein Regelsystem für den Wasserzulauf mit einer Sonde im Belebungsbecken für einen Indikator für die bakterielle Umsetzungsrate, wobei der Sondenausgang zu einem Meßverstärker-Mikroprozessor führt, der die kurzzeitige Freigabe des Zulaufs bei Erreichen des Indikatorsollwerts auslöst.

6. Anlage nach Anspruch 5,
   **dadurch gekennzeichnet,**
   daß als Sonde eine Sauerstoffelektrode vorgesehen ist.

7. Anlage nach Anspruch 5 oder 6,
   **gekennzeichnet durch**
   einen Alarmsignalgeber, der anspricht, wenn eine vorzugebende Sauerstoffkonzentration, die deutlich unterhalb des Schalt-Sollwertes liegt, nicht innerhalb einer einstellbaren Zeitspanne nach Ende des Abwasserzulaufs erreicht wird.

8. Anlage nach Anspruch 5 oder 7,
   **gekennzeichnet durch**
   ein Regelsystem, bei dem als Sonde eine pH-, rH- oder ionensensitive Elektrode oder ein konduktometrischer oder optischer Sensor vorgesehen ist.

## Claims

1. Process for waste water treatment by the activated sludge process, using an aeration tank with intermittent pulsed feeding, characterised in that each time 5 to 30% of the tank volume are added when the bacterial metabolic activity, to be determined by measuring the oxygen concentration, in the tank falls below a preset value, whereas the effluent discharge to the final clarification tank proceeds more or less uniformly.

2. Process according to Claim 1, characterised in that the pulsed feeding takes place at a cycle time of 0.5 to 2 hours.

3. Process according to Claim 1 or 2, characterised in that an alarm signal is triggered when the fall in the oxygen concentration does not correspond to the typical shape of the oxygen curve.

4. Waste water treatment plant for carrying out the process according to one of the preceding claims, comprising an aeration tank having an outflow to the final clarification tank and a stock tank draining into the aeration tank, characterised by a storage volume, which can be drained rapidly by means of a gate or valve mechanism, in the stock tank, which volume corresponds to 5 to 30% of the capacity of the aeration tank, a restrictor point in the outflow to the final clarification tank and a control system for the water feed with a programme control via a timer in accordance with empirical values of the course in time of the $O_2$ concentration.

5. Plant according to Claim 4, characterised by a control system for the water feed, having a probe in the aeration tank for an indicator of the bacterial metabolic rate, the probe output leading to a measuring amplifier/microprocessor which triggers the short-period release of the feed when the set value of the indicator is reached.

6. Plant according to Claim 5, characterised in that an oxygen electrode is provided as the probe.

7. Plant according to Claim 5 or 6, characterised by an alarm signal transmitter, which responds when an oxygen concentration which is to be preset and which is markedly below the nominal switching value, is not reached within an adjustable period after the end of the effluent feed.

8. Plant according to Claim 5 or 7, characterised by a control system, in which a pH electrode, rH electrode or ion-sensitive electrode or a conductimetric or optical sensor is provided as the probe.

## Revendications

1. Procédé d'épuration d'eaux résiduaires par le procédé aux boues activées, avec un bassin d'activation à aération et à amenée d'eaux résiduaires intermittente et charge par charge, caractérisé
   en ce qu'il consiste à charger de 5 à 30 % du volume du bassin, chaque fois que l'activité métabolique bactérienne dans le bassin, qui peut être déterminée en mesurant la concentration de l'oxygène, s'abaisse en-dessous d'une valeur prescrite, tout en effectuant de manière largement
   uni forme l'évacuation des eaux résiduaires vers le bassin de post-décantation.

2. Procédé suivant la revendication 1, caractérisé
   en ce que l'amenée d'eaux résiduaires charge par charge s'effectue avec un cycle de 0,5 à 2 heures.

3. Procédé suivant la revendication 1, caractérisé en ce qu'il consiste à déclencher un signal d'alerte si la chute de la concentration d'oxygène ne correspond pas à la variation typique de la courbe d'oxygène.

4. Installation d'épuration d'eaux résiduaires pour la mise en oeuvre du procédé suivant l'une des revendications précédentes, comprenant un bassin d'activation à aération et ayant une évacuation vers le bassin de post-décantation, ainsi qu'un bassin-réservoir se vidant dans le bassin d'activation, caractérisée par une chambre d'accumulation dans le bassin-réservoir, qui peut être vidée rapidement par un mécanisme à tiroir ou à vanne et qui représente de 5 à 30 % du volume du bassin d'activation, par un point d'étranglement dans l'évacuation vers le bassin de post-décantation et par un système de régulation de l'évacuation d'eaux résiduaires ayant une commande programmée par une minuterie en fonction des valeurs, connues par l'expérience, de la variation de la concentration de $O_2$ en fonction du temps.

5. Installation suivant la revendication 4, caractérisée par un système de régulation pour l'arrivée d'eau comprenant une sonde dans le bassin d'activation pour un indicateur du taux de conversion bactérien, la sortie de la sonde menant à un microprocesseur à amplificateur de mesure qui déclenche le dégagement de brève durée du conduit d'amenée lorsque la valeur de consigne de l'indicateur est atteinte.

6. Installation suivant la revendication 5, caractérisée en ce qu'il est prévu comme sonde une électrode à oxygène.

7. Installation suivant la revendication 5 ou 6, caractérisée par un générateur de signal d'alerte, qui réagit quand une concentration d'oxygène prescrite, qui est nettement inférieure à la valeur de consigne de commutation, n'est pas atteinte dans un laps de temps réglable après la fin de l'arrivée des eaux résiduaires.

8. Installation suivant la revendication 5 ou 7, caractérisée par un système de régulation dans lequel il est prévu comme sonde une électrode sensible au pH, au rH ou aux ions ou un capteur conducti-

métrique ou optique.

FIG. 1

FIG. 2

FIG. 3

START

SOLLWERT 1-VORGABE

$pO_2$ >SOLLWERT 1 ? — NEIN

JA

VENTIL ÖFFNEN
ZEITGEBER STARTEN
SOLLWERT 2-VORGABE

ZEIT > 3 MIN ? — NEIN

JA

VENTIL SCHLIESSEN

ZEIT > 5 MIN ? — NEIN

JA

$pO_2$ <SOLLWERT 2 ? — NEIN — ALARM!

JA

# FIG. 4

FIG. 5

FIG. 6

FIG. 7